Europäisches Patentamt

(19) European Patent Office

Office européen des brevets

(11) Publication number: **0 019 724**
**B1**

# EUROPEAN PATENT SPECIFICATION

(45) Date of publication of patent specification: **29.12.82**

(21) Application number: **80102243.5**

(22) Date of filing: **25.04.80**

(51) Int. Cl.³: **G 01 B 11/06,**
**G 01 N 21/86, G 11 B 5/84**

(54) Method of monitoring the thickness of thin dielectric films and performance of the method.

(30) Priority: **29.05.79 US 42830**

(43) Date of publication of application:
**10.12.80 Bulletin 80/25**

(45) Publication of the grant of the patent:
**29.12.82 Bulletin 82/52**

(84) Designated Contracting States:
**DE FR GB IT**

(56) References cited:
OPTICS COMMUNICATIONS Vol. 25, No. 1,
1978 Amsterdam A. HJORTSBERG et al.
"Infrared Surface EM-Wave Prism Spectroscopy
of Langmuir-Blodgett Mn-Stearate Layxers on
Ag" pages 65 to 68
APPLIED PHYSICS LETTERS, Vol. 32, No. 12, 15
June 1978 New York J. S. WEI et al. "A New
Method for Determining Thin-Film Refractive
Index and Thickness Using Guided Optical
Waves" pages 819 to 821

(73) Proprietor: **International Business Machines
Corporation**
**Armonk, N.Y. 10504 (US)**

(72) Inventor: **Gordon II, Joseph Grover**
**184 Castillon Way**
**San Jose California 95119 (US)**
Inventor: **Philpott, Michael Ronald**
**3260 Butterfly Lane**
**Morgan Hill California 95037 (US)**
Inventor: **Swalen, Jerome Douglas**
**16231 Matilija Dr.**
**Los Gatos California 95030 (US)**

(74) Representative: Lewis, Alan John
**IBM United Kingdom Patent Operations Hursley
Park**
**Winchester, Hants, SO21 2JN (GB)**

(56) References cited:
ZEITSCHRIFT FÜR PHYSIK, Vol. 216, 1968
Berlin A. OTTO "Excitation of Nonradiative
Surface Plasma Waves in Silver by the Method
of Frustrated Total Reflection" pages 398 to 410

Courier Press, Leamington Spa, England.

## Method of monitoring the thickness of thin dielectric films
## and performance of the method

The present invention relates to a method of monitoring the thickness of thin dielectric films on surfaces of metals and performance of the method.

It has been known for a considerable length of time that when certain metals are placed very close to the surface of a prism, polarized light, which ordinarily would be totally internally reflected by that prism surface, will be reflected in less than totality. The light which is not reflected may be thought of as being converted into surface plasma oscillations at the surface of the metal.

Attenuation of total internal reflection takes place with metals that are good conductors of electricity. Silver is best; gold and copper are also good. Magnesium, rhodium and aluminium also produce good results.

The subject of surface plasma oscillations is discussed in Zeitschrift fur Physik 216, 398—410 (1968) by Otto. The same author shows a prism placed above a metal surface with a gap in between. This is in a publication entitled "The Surface Polarition Resonance in Attenuated Total Reflection" (Polaritons, Proceedings of the First Taormina Research Conference on the Structure of Matter, Ed. E. Burstein and F. de Mortini (Pergamon, New York, 1974).

The effect of thin dielectric films on surface plasma resonance in gold is discussed in Optics Communications Vol. 22, No. 3, Page 374, published September 1977.

"Surface Plasmon Spectroscopy of Organic Monolayer Assemblies" is shown in Surface Science, Vol. 74, pp. 237—244 (1978).

Monitoring or measuring the thickness of thin dielectric films on metals can be done in a number of ways but all the ways of which we are aware have disadvantages. Particular difficulty is experienced in measuring or monitoring the thickness of a dielectric film on a moving metal carrier. Such a difficulty arises in the manufacture of aluminium based, magnetic storage disc since it is desirable to be able to monitor or measure the thickness of a lubricating film on the surface of the disc while the disc is in motion. The present invention is concerned with such difficulties and provides a solution thereto.

Accordingly, the invention provides, a method of monitoring the thickness of a thin dielectric film on a flat surface of a high electrical conductivity metal element, said method being characterised by arranging a flat surface of an optical prism in a spaced parallel relationship with the flat surface of the metal element to form a gap therebetween less than 10,000 Å thick, passing monochromatic polarised light into the prism so that it is internally reflected at the said surface of the prism, varying the angle of incidence of the light on the said prism surface so as to cause the angle of incidence to pass through the range of angles of incidence at which surface plasma oscillations are generated in the film-metal layer interface and the intensity of the internally reflected light is temporarily substantially reduced, monitoring the intensity of emergent light to detect the critical angle, within the aforesaid range of angles, at which the intensity of emergent light is a minimum and using a calibration to determine the film thickness corresponding to the detected critical angle.

The foregoing method is further characterised in that said metal element is moving in a direction parallel to the flat surface thereof and in that the aforesaid range of angles of incidence is detected during movement of the metal element.

An example of a method of measuring the thickness of a thin dielectric film, which method embodies the invention, will now be described with reference to the accompanying drawings, in which:—

Fig. 1 is a cross-sectional view (not to scale) of equipment suitable for performing the method to be described, and

Fig. 2 is a typical graph obtained when reflectivity is measured as a function of the angle of incidence.

In carrying out the method of the present invention, a prism is first placed in spaced parallel relationship to the metal surface which is covered by the thin dielectric film. This placing may be carried out either with the system at rest or aerodynamically while it is in motion. The prism should be placed so that there is a gap of from about 1000 Å to about 10,000 Å of thickness between the film surface and the prism plane polarized light is passed into the prism. The light is polarized in the plane of incidence. The light is passed into the prism and is incident at various angles of incidence on the internal reflecting surface thereof. Light incident at a specific angle, generates so-called surface plasma oscillations on the surface of the metal, and the total internal reflection, which would occur in the absence of the metal, is thereby attenuated. The intensity or magnitude of the reflected light is measured. It will be found that reflectivity is a function of the angle of incidence. Sufficient measurements will be made so that that angle of incidence which produces the minimum reflectivity is determined. This minimum angle of incidence is then compared to a previously determined standard to measure the film thickness.

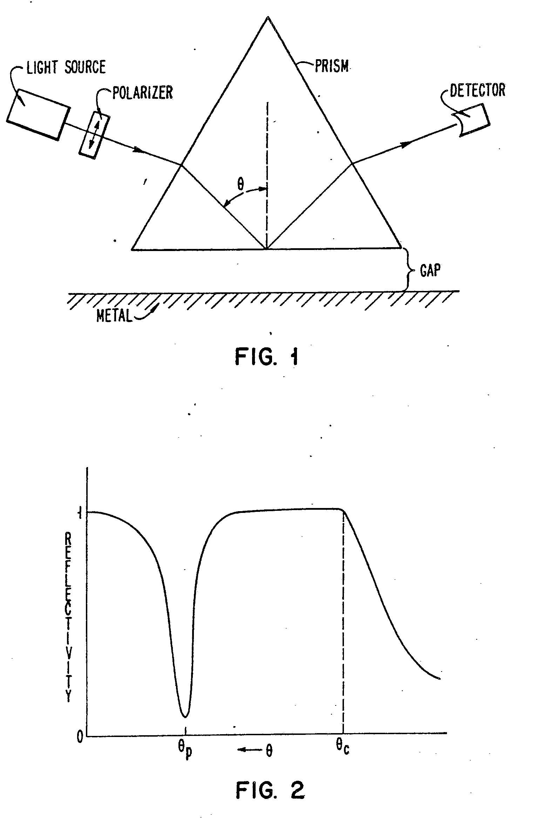

Referring to Fig. 1, it may be seen that light from some external source passes through a polarizer and then enters the prism. The prism is at a predetermined height above the surface of the metal. The light enters the prism and is incident on the internal reflecting surface thereof at a certain angle of incidence. In the absence of the metal, total reflectivity i.e. total internal reflection would take place. In the presence of metal, however, a portion of the light energy is converted from light energy into surface plasma oscillation. A detector is used to measure the intensity of the reflected light.

Turning now to Fig. 2, it will be seen that the amount of light which is converted into the surface plasma oscillations depends upon the angle of incidence $\theta$ of the light. Fig. 2 shows a plot of the amount of reflected light compared with the angle of incidence. As may be seen, there is a range of angles of incidence, centre about a critical angle $\theta p$, at which surface plasma oscillations are generated in the film-metal layer interface and the intensity of the reflected light, i.e. the reflectivity is temporarily substantially reduced. There is one certain angle $\theta p$ at which a maximum amount of light is converted to surface plasma oscillations. In other words, there is one particular angle at which the reflectivity is a minimum. The magnitude of this angle is a function of various parameter such as the properties of the prism and of the metal and of the spacings. The angle is particularly sensitive to the presence of dielectric films on the metal. The presence of dielectric films on the metal can be detected by measuring the shift in the angle of minimum reflectivity. For a predetermined known gap width, this shift can be quantitatively related to the film thickness.

No dielectric film is shown in Fig. 1 but in performance of the inventive method a dielectric film, probably between 5 Å and 1000 Å would coat the metal layer. The gap width would be less than 10,000 Å.

To measure the thickness of a thin dielectric film on a metal, standards or other calibrations for these materials are first prepared. They consist of a series of metal films covered with different thicknesses of dielectric coatings over the range of coatings to be determined by this method. The same coating dielectric must be used for both the standards as the unknown layers. The standards could be measured either with the system at rest or in motion. It has been found that for any given system of materials, there is a straight line (linear) relationship between the angle producing minimum reflectivity and the thickness of the film layer. Because of this discovered linear relationship, only two standards are necessary. Because one of these could even be the uncoated metal film, actually only one coated standard is required. When these standards are determined and a plot of thickness vs. angle is drawn, the present system may be employed while the metal is in motion. A comparison of the angle of incidence to the plot of standards leads directly and rapidly to a determination of the thickness of the overcoating.

It is a particular advantage of the present invention that it is useful when applied to moving materials. Most ordinary methods of measurement applicable to materials when they are standing still are simply not applicable to moving materials. This advantage is particularly valuable in regard to, for example, a magnetic disk which is part of a computer. Such disks are often treated with lubricants, and it often becomes important, particularly during the manufacture of the disks, to know the thickness of such a film of lubricant, while the disk is moving. The present invention provides a means of obtaining such measurement.

Hereinbefore there has been described a method of measuring the thickness of a dielectric film from about 5 to about 1000 Å in the thickness on the surface of a moving layer of a metal having high electrical conductivity, said method comprising the steps of providing a prism in a spaced relationship with the moving metal layer to form a gap from about 1,000 Å to about 10,000 Å thick, passing light which is polarized in the plane of incidence into said prism at various angles of incidence to generate surface plasma oscillations in the film-metal layer interface, and thereby attenuate reflectivity, measuring said reflectivity as a function of the angle of incidence, determining that angle of incidence which produces the minimum reflection, and comparing that angle of incidence with a previously determined standard to determine the film thickness.

**Claims**

1. A method of monitoring the thickness of a thin dielectric film on a flat surface of a high electrical conductivity metal element, said method being characterised by arranging a flat surface of an optical prism in a spaced parallel relationship with the flat surface of the metal element to form a gap therebetween less than 10,000 Å thick, passing monochromatic polarised light into the prism so that it is internally reflected at the said surface of the prism, varying the angle of incidence of the light on the said prism surface so as to cause the angle of incidence to pass through the range of angles of incidence at which surface plasma oscillations are generated in the film-metal layer interface and the intensity of the internally reflected light is temporarily substantially reduced, monitoring the intensity of emergent light to detect the critical angle ($\theta_p$), within the aforesaid range of angles, at which the intensity of emergent light is a minimum and using a calibration to determine the film thickness corresponding to the detected critical angle ($\theta_p$).

2. A method as claimed in claim 1, further characterised by establishing a calibration scale for predetermined parameter (e.g. gap width) using at least one film of known thickness.

3. A method as claimed in claim 2, further characterised in that said scale is linear and is established by detecting the aforesaid critical angle when no film is present on the metal surface and when a film of predetermined thickness is present on the metal surface.

4. A method as claimed in any one of claims 1 to 3, further characterised in that said metal element is moving in a direction parallel to the flat surface thereof and in that the aforesaid range of angles of incidence is detected during movement of the metal element.

5. A method as claimed in any one of claims 1 to 4, further characterised in that gap width is 1000 Å or greater than 1000 Å and that the thickness of the film is between 5 Å and 1000 Å.

6. A method as claimed in any one of claims 1 to 5, further characterised in that the metal is silver, gold, copper, magnesium, aluminium or rhodium.

7. A method as claimed in any one of claims 1 to 6, further characterised in that the dielectric film is a lubricant film.

8. In the manufacture of a magnetic storage disc, performance of a method as claimed in any one of claims 1 to 7 to monitor or measure the thickness of a film of lubricant on the disc.

## Patentansprüche

1. Verfahren zur Überwachung der Dicke einer dünnen dielektrischen Schicht auf einer ebenen Oberfläche eines metallischen Substrats mit hoher elektrischer Leitfähigkeit, dadurch gekennzeichnet, daß eine ebene Oberfläche eines optischen Prismas räumlich parallel zur Oberfläche des Substrats unter Bildung eines Spaltes von weniger als 10 000 Å Dicke angeordnet wird, daß monochromatisches polarisiertes Licht so in das Prisma eingekoppelt wird, daß es an dessen genannter Oberfläche innen reflecktiert wird, daß der Einfallswinkel des Lichts auf die Prismenoberfläche geändert wird, um den Bereich von Einfallswinkeln zu überstreichen, bei dem in der Grenzschicht Schicht-Metall Oberflächen-Plasmaoszillationen angeregt werden und die Intensität des innen reflektierten Lichts zeitweise beträchtlich reduziert wird, daß die Intensität des austretenden Lichts laufend gemessen wird, um den kritischen Winkel ($\theta_p$) innerhalb des Winkelbereichs zu messen, bei dem die Intensität des austretenden Lichts ein Minimum ist und daß eine Eichung verwendet wird, um die Schichtdicke zu bestimmen, die dem festgestellten kritischen Winkel ($\theta_p$) entspricht.

2. Verfahren nach Anspruch 1, dadurch gekennzeichnet, daß eine Eichskala für vorherbestimmte Parameter z. B. Spaltbreite) unter Verwendung von mindestens einem Film bekannter Dicke aufgestellt wird.

3. Verfahren nach Anspruch 2, dadurch gekennzeichnet, daß die Eichskala linear ist und aufgestellt wird, indem der kritische Winkel bestimmt wird, wenn kein Film auf der Metalloberfläche bzw. wenn eine Film vorbestimmter Dicke auf der Metalloberfläche vorhanden ist.

4. Verfahren nach einem der Ansprüche 1 bis 3, dadurch gekennzeichnet, daß das Metallsubstrat in einer Richtung parallel zu seiner ebenen Oberfläche verschoben wird und daß der Bereich von Einfallswinkeln während der Bewegung des Metallsubstrats festgestellt wird.

5. Verfahren nach einem der Ansprüche 1 bis 4, dadurch gekennzeichnet, daß die Spaltbreite 1000 Å beträgt oder größer als 1000 Å ist und daß die Dicke der Schicht zwischen 5 Å und 1000 Å liegt.

6. Verfahren nach einem der Ansprüch 1 bis 5, dadurch gekennzeichnet, daß das Metall Silber, Gold, Kupfer, Magnesium, Aluminium oder Rhodium ist.

7. Verfahren nach einem der Ansprüche 1 bis 6, dadurch gekennzeichnet, daß die dielektrische Schicht ein Schmierfilm ist.

8. Verfahren nach einem der Ansprüche 1 bis 7, dadurch gekennzeichnet, daß es bei der Herstellung von magnetischen Speicherscheiben zur Überwachung oder Messung der Dikke einer Schicht von Schmierstoffen auf der Scheibe verwendet wird.

## Revendications

1. Procédé pour contrôler l'épaisseur d'un film dielectrique mince sur une surface plate d'un élément en métal à conductivité électrique élevée, ledit procédé étant caractérisé par l'agencement d'une surface plate d'un prisme optique parallèlement à la surface plate de l'élément métallique et à distance de celle-ci, afin de laisser un intervalle entre les deux éléments d'une largeur intérieure à 10000 Å, le passage d'une lumière polarisée monochromatique dans le prisme de façon que celle-ci soit intérieurement réfléchie à ladite surface du prisme, la variation de l'angle d'incidence de la lumière sur ladite surface du prisme de façon à provoquer le passage de l'angle d'incidence par la plage des angles d'incidence pour lesquels des oscillations du plasma de surface sont générées dans l'interface filmcouche métallique et l'intensité de la lumière réfléchie intérieurement, temporairement et substantiellement réduite, la détermination de l'intensité de la lumière émergente pour détecter l'angle critique ($\theta_p$) dans la plage des angles indiquée plus haut, pour lesquels l'intensité de la lumière émergente a une valeur minimale et par l'utilisation d'une calibration pour déterminer l'épaisseur du film correspondant à l'angle critique détecté ($\theta_p$).

2. Procédé selon la revendication 1 caractérisé en outre par l'établissement d'une échelle de calibration pour des paramètres prédéterminés (par exemple la largeur de l'intervalle (en utilisant au moins un film d'épaisseur connu.

3. Procédé selon la revendication 2 caractérisé en outre par le fait que ladite échelle est linéaire et établie par la détection dudit angle critique lorsqu'aucun film n'est présent sur la surface métallique et lorsqu'un film d'épaisseur prédéterminée est présent sur la surface métallique.

4. Procédé selon l'une quelconque des revendications 1 à 3 caractérisé en outre en ce que ledit élément de métal se déplace dans une direction parallèle à sa surface plate et en ce que ladite plage des angles d'incidence est détectée pendant le mouvement de l'élément métallique.

5. Procédé selon l'une quelconque des revendications 1 à 4 caractérisé en outre en ce que la largeur de l'intervalle est de 1000 Å ou plus et en ce que l'épaisseur du film est comprise entre 5 Å et 1000 Å.

6. Procédé selon l'une quelconque des revendications 1 à 5 caractérisé en outre en ce que le métal est de l'argent, d l'or, du cuivre, du magnésium, de l'aluminium ou du rhodium.

7. Procédé selon l'une quelconque des revendications 1 à 6 caractérisé en outre en ce que le film diélectrique est un film de lubrifiant.

8. A la fabrication d'une disque d'emmagasinage magnétique, l'exécution d'un procédé selon l'une quelconque des revendications 1 à 7 pour déterminer ou mesurer l'épaisseur d'un film de lubrifiant sur le disque.

FIG. 1

FIG. 2